(19) Europäisches Patentamt
European Patent Office
Office européen des brevets

(11) **EP 3 824 540 B1**

(12) **FASCICULE DE BREVET EUROPEEN**

(45) Date de publication et mention
de la délivrance du brevet:
**22.11.2023 Bulletin 2023/47**

(21) Numéro de dépôt: **19733826.2**

(22) Date de dépôt: **02.07.2019**

(51) Classification Internationale des Brevets (IPC):
***H02P 6/18*** *(2016.01)*

(52) Classification Coopérative des Brevets (CPC):
**H02P 6/183**

(86) Numéro de dépôt international:
**PCT/EP2019/067747**

(87) Numéro de publication internationale:
**WO 2020/016001 (23.01.2020 Gazette 2020/04)**

(54) **PROCÉDÉ DE DÉTERMINATION DE LA POSITION ET DE LA VITESSE DU ROTOR D'UNE MACHINE ÉLECTRIQUE SYNCHRONE À ROTOR BOBINÉ**

POSITIONS UND GESCHWINDIGKEITSBESTIMMUNG EINES WICKELROTOR EINER ELEKTRISCHEN SYNCHRONMASCHINE VERFAHREN

POSITION AND SPEED DETERMINATION OF A SYNCHRON ELECTRIC MACHINE WOUNDED ROTOR METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.07.2018 FR 1856736**

(43) Date de publication de la demande:
**26.05.2021 Bulletin 2021/21**

(73) Titulaire: **Renault s.a.s**
**92100 Boulogne Billancourt (FR)**

(72) Inventeurs:
• **KOTEICH, Mohamad**
**91440 Bures sur Yvette (FR)**
• **MESSALI, Amir**
**44300 Nantes (FR)**
• **GHANES, Malek**
**44300 Nantes (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**CN-B- 103 427 746      US-A- 6 069 467**
**US-A1- 2004 070 360**

EP 3 824 540 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

L'invention se rapporte au domaine des machines électriques synchrones à rotor bobiné.

Plus particulièrement, l'invention concerne un procédé de détermination de la position et de la vitesse du rotor d'une machine électrique synchrone à rotor bobiné.

Pour contrôler une machine électrique synchrone à rotor bobiné (abrégé en MSRB), il est généralement nécessaire de connaître la position et la vitesse du rotor.

Une solution bien connue de l'art antérieur consiste à installer sur l'arbre mécanique de la machine un ou plusieurs capteurs mécaniques de position et de vitesse.

Cependant, ces capteurs mécaniques sont coûteux, encombrants, sensibles à l'environnement (température, bruits, oscillations mécaniques, compatibilité électromagnétique, etc.) et réduisent la fiabilité du système.

Aussi, pour éviter d'utiliser des capteurs mécaniques, des procédés de contrôle sans capteur mécanique ont été développés pour assurer un contrôle de qualité identique, voire meilleur, que celui du contrôle avec capteur mécanique.

Habituellement, ces procédés de contrôle sans capteur utilisent des algorithmes d'estimation de la position/vitesse mécanique, aussi appelés capteurs logiciels, en boucle fermée, se basant sur la seule mesure des courants.

On connaît aussi des procédés d'estimation de la position/vitesse du rotor par injection de signaux haute fréquence, tel que décrit dans le document US2004070360 A1 ou CN 103 427 746 B, qui ont pour effet de permettre une détection moins dépendante des paramètres de la machine.

Cependant ces procédés restent tout de même dépendants des paramètres des machines électriques, et plus particulièrement pour les MSRB, des inductances statoriques vues par le rotor. De plus ces techniques reposent sur la connaissance des caractéristiques de signal injecté, tels que l'amplitude et la fréquence.

Aussi, il existe le besoin d'un procédé d'estimation de la position/vitesse plus fiable et moins dépendant des paramètres de la machine électrique synchrone à rotor bobiné.

À cet effet, on propose un procédé d'estimation de la vitesse et de la position d'un rotor d'une machine synchrone à rotor bobiné alimenté par un onduleur triphasé, comprenant :

- une étape de mesure des courants triphasés en entrée de la machine synchrone à rotor bobiné ;
- une étape de transformation des courants triphasés mesurés dans un repère diphasé ;
- une première partie comprenant :

  - une étape d'injection en entrée de la machine d'un signal de tension haute-fréquence ;
  - une étape de démodulation pour déterminer une valeur d'erreur ($\varepsilon$) d'estimation de position du rotor ;

caractérisé en ce qu'il comprend une deuxième partie comportant :

- une étape de calcul du signe de l'erreur d'estimation de position ;
- une étape d'estimation de la position du rotor en fonction d'un paramètre de gain de position, du signe de l'erreur ainsi calculé, indépendamment des paramètres de la machine électrique, tels que des valeurs d'inductances statoriques de la machine électrique ; et
- une étape d'estimation de la vitesse du rotor en fonction d'un paramètre de gain de vitesse, du signe de l'erreur ainsi calculé, indépendamment des paramètres de la machine électrique, tels que des valeurs d'inductances statoriques de la machine électrique.

Ainsi, on peut estimer la vitesse et la position du rotor seulement à partir de paramètres indépendants de la machine électrique, ce qui améliore la robustesse et la simplicité d'adaptation à toute machine à rotor bobiné.

Avantageusement et de manière non limitative, l'étape d'estimation de la position du rotor à un instant donné est fonction de la position estimée à un instant précédent, ainsi que de la vitesse estimée à l'instant précédent. Ainsi, par cette approche en boucle de l'estimation de la position, on peut obtenir une estimation rapide, simple et robuste.

Avantageusement et de manière non limitative, l'étape d'estimation de la vitesse du rotor à un instant donné est fonction de la vitesse estimée à l'instant précédent. Ainsi, par cette approche en boucle de l'estimation de la vitesse, on peut obtenir une estimation rapide, simple et robuste.

Avantageusement et de manière non limitative, le procédé met en outre en oeuvre une étape de calcul de l'accélération en fonction du signe de l'erreur et de l'accélération estimée à l'instant précédent. Ainsi, on peut obtenir une estimation de l'accélération robuste et indépendante des paramètres de la machine électrique.

Avantageusement et de manière non limitative, le procédé comprend en outre une étape de calcul de la dynamique d'accélération en fonction du signe de l'erreur et de la valeur de dynamique d'accélération estimée à l'instant précédent. Ainsi, on peut obtenir une estimation de la dynamique d'accélération robuste et indépendante des paramètres de la machine électrique. Cette estimation permettant d'affiner les autres estimations du procédé.

Avantageusement et de manière non limitative, l'étape de calcul de l'accélération est fonction de la valeur de dynamique d'accélération estimée à l'instant précédent. Ainsi, on peut obtenir une valeur d'accélération encore plus précise.

Avantageusement et de manière non limitative, les paramètres de gain de position et de vitesse sont fonction de la valeur de dynamique d'accélération estimée à l'instant précédent. Ainsi, on peut obtenir des gains adaptatifs permettant d'affiner les estimations de position et de vitesse.

Avantageusement et de manière non limitative, les paramètres de gain de position et de vitesse sont fonction de la valeur d'accélération estimée à l'instant précédent. Ainsi, on peut obtenir des gains adaptatifs permettant d'affiner les estimations de position et de vitesse.

L'invention concerne aussi un ensemble comprenant une machine électrique synchrone à rotor bobiné et un dispositif de mise en oeuvre d'un procédé tel que décrit précédemment.

L'invention concerne aussi un véhicule automobile comprenant un ensemble tel que décrit précédemment.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :

- la figure 1 est une vue schématique d'un procédé selon l'invention ;
- la figure 2 est une représentation schématique d'un rotor et des axes de calcul employés dans le procédé selon l'invention ;
- la figure 3 est une vue schématique d'une étape de calcul des estimations de position et de vitesse du rotor selon un premier mode de réalisation de l'invention ;
- la figure 4 est une vue schématique d'une étape de calcul des estimations de position et de vitesse du rotor selon un deuxième mode de réalisation de l'invention ; et
- la figure 5 est une vue schématique d'une étape de calcul des estimations de position et de vitesse du rotor selon un troisième mode de réalisation de l'invention.

Le procédé d'estimation de la vitesse et de la position du rotor d'une machine synchrone à rotor bobiné comprend une étape de mesure 10 des courants triphasés, deux parties distinctes : une première partie 11 de traitement du signal, comprenant notamment l'injection d'un signal haute fréquence (HF) et l'extraction de l'expression d'erreur et une deuxième partie 12 d'estimation en fonction du signal injecté.

Tout d'abord le procédé met en oeuvre une étape de mesure 10 des courants triphasés $i_a$, $i_b$, $i_c$ en entrée de la machine synchrone à rotor bobiné. Celle-ci est alimentée par un onduleur triphasé. Cette étape n'est cependant pas obligatoirement réalisée avant la première partie 11 du procédé, elle peut aussi être réalisée pendant la première partie 11 du procédé, par exemple avant qu'il ne soit nécessaire de faire appel aux valeurs de courant triphasés mesurés $i_a$, $i_b$, $i_c$.

La première partie 11 du procédé comprend la mise en oeuvre d'une méthode d'injection d'un signal haute fréquence fréquemment nommée technique pulsante. Autrement dit, on injecte un signal haute-fréquence, ici une tension haute-fréquence, par addition à la tension d'entrée de l'onduleur dans le repère tournant estimé $\hat{d}\hat{q}$.

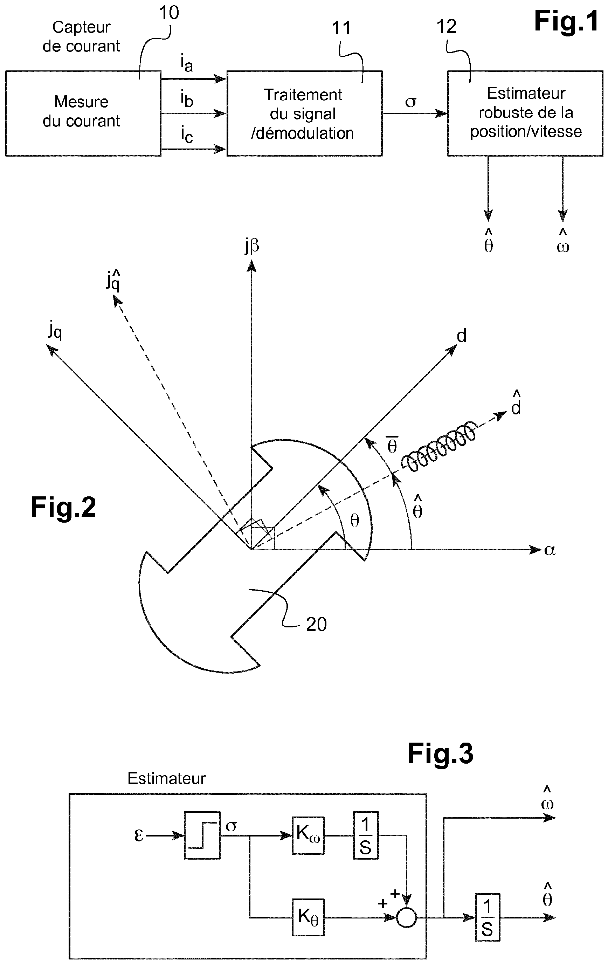

La technique pulsante, connue de l'homme du métier, permet d'injecter une tension haute fréquence dans un repère de Park estimé $\hat{d}\hat{q}$. En référence à la figure 2, le repère de Park est orienté par rapport à l'angle $\hat{\theta}$, correspondant à l'estimation de la position du rotor 20, selon les équations suivantes :

$$\hat{v}_d = V_c \cos(\omega_c t) \qquad (1)$$

$$\hat{v}_q = 0 \qquad (2)$$

où :

$V_c$ est l'amplitude de la tension haute fréquence injectée.

$\omega_c = \dfrac{d\theta}{dt}$ est la fréquence de la tension haute fréquence injectée.

À partir des courants triphasés mesurés, nous déduisons les courants diphasés $\begin{matrix} i_\alpha(k) \\ i_\beta(k) \end{matrix}$ mesurés par application de l'équation suivante :

$$\begin{bmatrix} i_\alpha(k) \\ i_\beta(k) \end{bmatrix} = \sqrt{\left(\frac{2}{3}\right)} \begin{bmatrix} 1 & -\frac{1}{2} & -\frac{1}{2} \\ 0 & \frac{\sqrt{3}}{2} & -\frac{\sqrt{3}}{2} \end{bmatrix} \begin{bmatrix} i_a(k) \\ i_b(k) \\ i_c(k) \end{bmatrix} \qquad (1)$$

Cette équation (1) décrit la mesure des courant triphasés $i_a$, $i_b$, $i_c$ selon l'étape de mesure 10 du procédé et leur transformation triphasé-diphasé statique αβ, selon une transformée de Concordia.

Les courants diphasés $\begin{matrix} i_\alpha(k) \\ i_\beta(k) \end{matrix}$ obtenus sont ensuite ramenés par une rotation d'un angle $\hat\theta$ à une seule mesure dans l'axe tournant estimé $\hat d$, en supposant que le courant dans l'axe tournant estimé $\hat q$ est nul (les axes étant supposés découplés).

En réalité, bien qu'on considère par approximation que le courant $i_{\hat q}$ sur l'axe $\hat q$ est nul, il est en pratique fonction de l'erreur ε = $\theta$ - $\hat\theta$, C'est pourquoi il est utile de mettre en oeuvre un procédé dit algorithme de poursuite *(tracking algorithm* en anglais) pour minimiser cette erreur de position ε de sorte à récupérer la position correcte $\theta$ du rotor. Autrement dit, le courant $i_{\hat q}$ étant proportionnel à l'erreur de position ε = $\theta$ - $\hat\theta$, on cherche la valeur d'angle $\hat\theta$ qui annule ce courant, dans ce cas $\theta$ = $\hat\theta$.

On applique alors une étape de démodulation, ici une étape de démodulation hétérodyne connue de l'homme du métier. Dans cette étape, on multiplie le courant $i_{\hat q}$ par un sin $\omega_c t$ puis on filtre le résultat, par application d'un filtre passe-bas, ici du premier ordre, mais qui peut être aussi du deuxième ordre ou de tout ordre supérieur.

Ainsi, l'erreur peut être calculée par les équations (3) et (4) suivantes :

$$\varepsilon = \frac{I_{cn}}{2} \sin\left[2\left(\theta - \hat\theta\right)\right] \qquad (3)$$

où :

$$I_{cn} = \frac{V_c(L_d - L_q)}{\omega_c L_d L_q} \qquad (4)$$

Ld, Lq correspondant aux inductances statoriques dans le repère d,q de la machine,
Vc l'amplitude du signal injecté ; et
$\omega_c$ la pulsation du signal injecté.

Or, cette fonction d'erreur ε est toujours dépendante de paramètres de la machine, ici des inductances statoriques Ld, Lq dans le repère d,q de la machine.

Aussi, afin de rendre le procédé d'estimation indépendant des paramètres de la machine, le procédé comprend une deuxième partie 12 d'obtention d'une estimation en fonction du signal injecté, plus robuste que celles de l'art antérieur.

Selon un premier mode de réalisation de l'invention, en référence à la figure 3, on définit un paramètre indépendant appelé paramètre estimateur σ, ou plus simplement estimateur, selon l'équation suivante :

$$\sigma = \frac{\epsilon}{|\epsilon|} = \frac{\frac{I_{cn}}{2}\sin[2(\theta-\hat\theta)]}{|\frac{I_{cn}}{2}\sin[2(\theta-\hat\theta)]|} \qquad (5)$$

et lorsque

$$\theta \approx \hat\theta \qquad (6)$$

$$\sigma = \frac{\varepsilon}{|\varepsilon|} = \frac{\frac{I_{cn}}{2}\Delta\theta}{|\frac{I_{cn}}{2}\Delta\theta|} = \frac{\Delta\theta}{|\Delta\theta|} = sign\,(\Delta\theta) \quad (7)$$

où :

$$sign\,(\Delta\theta) = sign\,(\theta - \hat{\theta})$$

Ainsi, l'estimateur $\sigma$ obtenu est indépendant des paramètres de la machine, en particulier des valeurs d'inductances, et est découplé des caractéristiques du signal injecté par rapport à l'équation (3).

Seul le signe de l'erreur $\theta - \hat{\theta}$ est requis pour estimer la position et la vitesse des machines à courant alternatif, à un instant k+1 donné, sans capteur mécanique par l'estimateur innovant (8) (9) proposé selon les équations suivantes :

$$\hat{\theta}_{k+1} = \hat{\theta}_k + T_s\left(\hat{\omega}_k + K_\theta\,sign(\theta_k - \hat{\theta}_k)\right) \qquad (8)$$

$$\hat{\omega}_{k+1} = \hat{\omega}_k + T_s K_w\,sign(\theta_k - \hat{\theta}_k) \qquad (9)$$

où

$$sign(\theta_k - \hat{\theta}_k) = 1 \qquad si \qquad \theta_k - \hat{\theta}_k > 0 \qquad (10)$$

$$sign(\theta_k - \hat{\theta}_k) = 0 \qquad si \qquad \theta_k - \hat{\theta}_k = 0 \qquad (11)$$

$$sign(\theta_k - \hat{\theta}_k) = -1 \qquad si \qquad \theta_k - \hat{\theta}_k < 0 \qquad (12)$$

Les paramètres $K_\theta$ et $K_\omega$ sont choisis de manière à assurer la rapidité de convergence et le rejet de perturbations (broutements, offsets etc.). Par exemple on peut définir $K_\theta$=1 et $K_\omega$=1500, ce qui assure une bonne qualité d'estimation et une stabilité à temps fini. Ts est la période d'échantillonnage de l'estimateur.

Ainsi, on peut calculer simplement la position estimée $\hat{\theta}_{k+1}$ du rotor à l'instant k+1 en fonction de la position estimée à l'instant précédent $\hat{\theta}_k$, de la vitesse estimée à l'instant précédent $\hat{\omega}_k$, et en fonction du signe $\sigma$ de l'erreur d'estimation de position, indépendamment des paramètres de la machine.

On peut aussi calculer simplement la vitesse estimée $\hat{\omega}_{k+1}$ du rotor à l'instant k+1 en fonction de la vitesse estimée à l'instant précédent $\hat{\omega}_k$, et en fonction du signe $\sigma$ de l'erreur de position, indépendamment des paramètres de la machine.

Ainsi, en utilisant l'équation (7) de définition de l'estimateur $\sigma$, on peut obtenir une estimation de la position et de la vitesse relativement robuste.

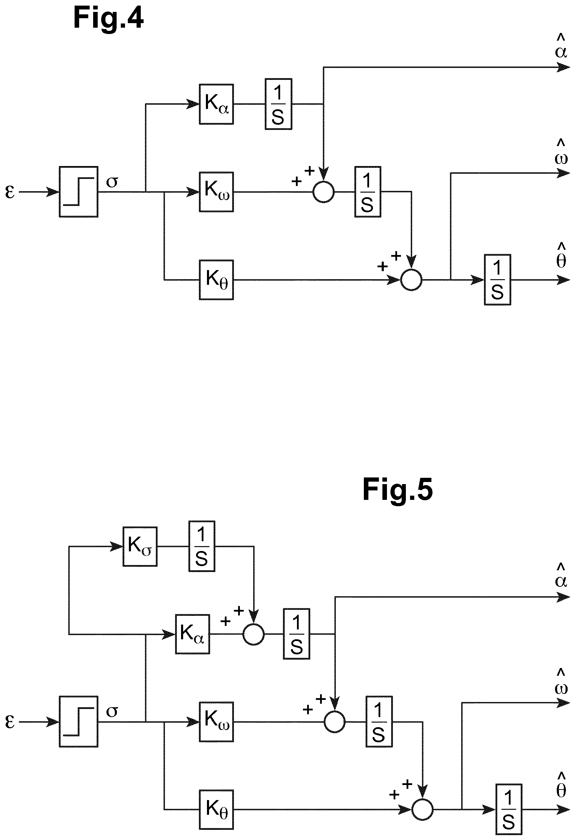

Selon un deuxième mode de réalisation de l'invention, en référence à la figure 4, on peut encore améliorer la robustesse de l'estimation de la vitesse et de la position du rotor.

À cet effet, on propose un autre mode de calcul se basant sur les équations suivantes (13), (14) et (15), augmenté par rapport au modèle du premier mode de réalisation selon les équations (8) et (9).

Ce deuxième mode de réalisation de l'invention prend en compte la dynamique de la vitesse du rotor, son objectif est de corriger l'erreur d'estimation sur la vitesse et la position dans les phases d'accélération.

Aussi, les équations (8) et (9) d'estimation du premier mode de réalisation sont substituées par les équations suivantes :

$$\hat{\theta}_{k+1} = \hat{\theta}_k + T_s\left(\hat{\omega}_k + K_\theta\,sign(\theta_k - \hat{\theta}_k)\right) \qquad (13)$$

$$\widehat{\omega}_{k+1} = \widehat{\omega}_k + T_s \left( \widehat{\alpha}_k + K_\omega \, sign(\theta_k - \widehat{\theta}_k) \right) \qquad (14)$$

$$\widehat{\alpha}_{k+1} = \widehat{\alpha}_k + T_s K_\alpha \, sign(\theta_k - \widehat{\theta}_k) \qquad (15)$$

où la fonction 5 est définie par les équations précédentes (10), (11) et (12).

Ainsi, l'estimateur de ce deuxième mode de réalisation de l'invention, comprend l'estimation de la position $\widehat{\theta}_{k+1}$, de la vitesse $\widehat{\omega}_{k+1}$ et de l'accélération $\widehat{\alpha}_{k+1}$ du rotor de la machine.

Cet estimateur permet dès lors d'annuler l'écart d'estimation de la vitesse et de la position dans les phases d'accélérations de la machine en prenant en compte la dynamique de la vitesse sans pour autant avoir recours à la connaissance des paramètres mécaniques de la machine (l'inertie, le couple de charge, le frottement qui dépend des caractéristiques des pneus et de la route), ce qui a pour conséquence d'éviter l'utilisation d'un observateur de système mécanique.

En outre ce deuxième mode de réalisation de l'invention permet d'obtenir une information sur le bilan de couple de la machine indépendamment de la connaissance des paramètres mécaniques de la machine via l'estimation de l'accélération (dynamique de la vitesse).

Un troisième mode de réalisation de l'invention, en référence à la figure 5, dérivant du deuxième mode de réalisation de l'invention, modifie les équations d'estimations (13), (14) et (15) en cherchant en outre à réduire les à-coups sur l'accélération, ce qui a pour conséquence d'avoir une estimation plus précise de la position et de la vitesse.

Les équations modifiées d'estimation sont dès lors données par les équations (16), (17), (18) et (19) suivantes :

$$\widehat{\theta}_{k+1} = \widehat{\theta}_k + T_s \left( \widehat{\omega}_k + K_\theta \, sign(\theta_k - \widehat{\theta}_k) \right) \qquad (16)$$

$$\widehat{\omega}_{k+1} = \widehat{\omega}_k + T_s \left( \widehat{\alpha}_k + K_\omega \, sign(\theta_k - \widehat{\theta}_k) \right) \qquad (17)$$

$$\widehat{\alpha}_{k+1} = \widehat{\alpha}_k + T_s \left( \widehat{\sigma}_k + K_\alpha \, sign(\theta_k - \widehat{\theta}_k) \right) \qquad (18)$$

$$\widehat{\sigma}_{k+1} = \widehat{\sigma}_k + T_s K_\sigma \, sign(\theta_k - \widehat{\theta}_k) \qquad (19)$$

où la fonction $sign(\theta_k - \widehat{\theta}_k)$ est définie par les équations (10), (11) et (12).

Ainsi, on calcule une valeur de dynamique d'accélération ($\widehat{\sigma}_{k+1}$) à un instant k+1 en fonction du signe de l'erreur à l'instant k précédent.

La valeur d'accélération pour un instant k+1, selon l'équation (18) est alors fonction de la valeur de dynamique d'accélération $\widehat{\sigma}_k$ calculée à l'instant précédent k.

Un quatrième mode de réalisation, non représenté, consiste à adapter les gains des estimateurs de position et de vitesse des équations (13) et (14) en fonction de l'estimation de l'accélération selon l'équation (15) et les estimateurs de position, de vitesse et d'accélération des équations (16), (17), (18) en fonction de la dynamique de l'accélération (19).

Ceci permet de rendre les estimations encore plus précises. Par conséquent les gains adaptés pour les estimateurs des équations (13), (14) du deuxième mode de réalisation sont définies par les équations suivantes (20) à (22) :

$$\widehat{\theta}_{k+1} = \widehat{\theta}_k + T_s \left( \widehat{\omega}_k + (K_\theta + |\widehat{\alpha}_k|) \, sign(\theta_k - \widehat{\theta}_k) \right) \qquad (20)$$

$$\widehat{\omega}_{k+1} = \widehat{\omega}_k + T_s \left( \widehat{\alpha}_k + (K_\omega + |\widehat{\alpha}_k|) \, sign(\theta_k - \widehat{\theta}_k) \right) \qquad (21)$$

$$\hat{\alpha}_{k+1} = \hat{\alpha}_k + T_s K_\alpha \, sign(\theta_k - \hat{\theta}_k) \tag{22}$$

et les gains adaptés pour les estimateurs des équations (16), (17) et (18) du troisième mode de réalisation sont :

$$\hat{\theta}_{k+1} = \hat{\theta}_k + T_s \left( \hat{\omega}_k + (K_\theta + |\hat{\sigma}_k|) \, sign(\theta_k - \hat{\theta}_k) \right) \tag{23}$$

$$\hat{\omega}_{k+1} = \hat{\omega}_k + T_s \left( \hat{\alpha}_k + (K_\omega + |\hat{\sigma}_k|) \, sign(\theta_k - \hat{\theta}_k) \right) \tag{24}$$

$$\hat{\alpha}_{k+1} = \hat{\alpha}_k + T_s \left( \hat{\sigma}_k + (K_\alpha + |\hat{\sigma}_k|) \, sign(\theta_k - \hat{\theta}_k) \right) \tag{25}$$

$$\hat{\sigma}_{k+1} = \hat{\sigma}_k + T_s K_\sigma \, sign(\theta_k - \hat{\theta}_k) \tag{26}$$

où la fonction $sign(\theta_k - \hat{\theta}_k)$ est définie par les équations (10), (11) et (12).

## Revendications

1. Procédé d'estimation de la vitesse et de la position d'un rotor (20) d'une machine synchrone à rotor (20) bobiné alimenté par un onduleur triphasé, comprenant :

   - une étape de mesure des courants triphasés ( $i_a$, $i_b$, $i_c$) en entrée de la machine synchrone à rotor (20) bobiné ;
   - une étape de transformation des courants triphasés ( $i_a$, $i_b$, $i_c$) mesurés dans un repère diphasé ($\hat{d}\hat{q}$);
   - une première partie (11) comprenant :

      - une étape d'injection en entrée de la machine d'un signal de tension haute-fréquence ;
      - une étape de démodulation hétérodyne pour déterminer une valeur d'erreur (ε) d'estimation de position du rotor (20) ;

   **caractérisé en ce qu'**il comprend une deuxième partie (12) comportant :

      - une étape de calcul du signe (σ) de l'erreur (ε) d'estimation de position ;
      - une étape d'estimation de la position du rotor ($\hat{\theta}_{k+1}$) en fonction d'une vitesse estimée du rotor ($\hat{\omega}_k$)), d'un paramètre de gain de position ($K_\theta$) multiplié par le signe (σ) de l'erreur (ε) ainsi calculé, indépendamment des paramètres de la machine électrique, tels que des valeurs d'inductances statoriques de la machine électrique ; et
      - une étape d'estimation de la vitesse du rotor ($\hat{\omega}_{k+1}$) en fonction d'un paramètre de gain de vitesse ($K_\omega$) multiplié par le signe (σ) de l'erreur (ε) ainsi calculé, indépendamment des paramètres de la machine électrique, tels que des valeurs d'inductances statoriques de la machine électrique.

2. Procédé d'estimation selon la revendication 1, **caractérisé en ce que** l'étape d'estimation de la position du rotor ($\hat{\theta}_{k+1}$) à un instant (k+1) donné est fonction de la position estimée ($\hat{\theta}_k$) à un instant précédent (k), ainsi que de la vitesse ($\hat{\omega}_k$) estimée à l'instant précédent (k).

3. Procédé d'estimation selon la revendication 1 ou 2, **caractérisé en ce que** l'étape d'estimation de la vitesse du rotor ($\hat{\omega}_{k+1}$) à un instant (k+1) donné est fonction de la vitesse ($\hat{\omega}_k$) estimée à l'instant précédent (k).

4. Procédé d'estimation selon l'une quelconque des revendication 1 à 3, **caractérisé en ce qu'**il met en outre en oeuvre une étape de calcul de l'accélération ($\hat{\alpha}_{k+1}$) en fonction du signe (σ) de l'erreur (ε) et de l'accélération ($\hat{\alpha}_k$) estimée à l'instant précédent (k).

5. Procédé d'estimation selon l'une quelconque des revendications 1 à 4, **caractérisé en ce qu'**il comprend en outre une étape de calcul de la dynamique d'accélération ($\hat{\sigma}_{k+1}$) en fonction du signe ($\sigma$) de l'erreur ($\varepsilon$) et de la valeur de dynamique d'accélération ($\hat{\sigma}_k$) estimée à l'instant précédent (k).

6. Procédé d'estimation selon la revendication 5, **caractérisé en ce que** l'étape de calcul de l'accélération ($\hat{\alpha}_{k+1}$) est fonction de la valeur de dynamique d'accélération ($\hat{\sigma}_k$) estimée à l'instant précédent (k).

7. Procédé d'estimation selon l'une quelconque des revendications 4 à 6, **caractérisé en ce que** les paramètres de gain de position ($K_\theta$) et de vitesse ($K_\omega$) sont fonction de la valeur de dynamique d'accélération ($\hat{\sigma}_k$) estimée à l'instant précédent (k).

8. Procédé d'estimation selon l'une quelconque des revendications 5 ou 6, **caractérisé en ce que** les paramètres de gain de position ($K_\theta$) et de vitesse ($K_\omega$) sont fonction de la valeur d'accélération ($\hat{\sigma}_k$) estimée à l'instant précédent (k).

**Patentansprüche**

1. Verfahren zur Schätzung der Geschwindigkeit und der Position eines Rotors (20) einer Synchronmaschine mit gewickeltem Rotor (20) gespeist von einem Dreiphasen-Wechselrichter, das enthält:

   - einen Schritt der Messung der Dreiphasenströme ($i_a$, $i_b$, $i_c$) am Eingang der Synchronmaschine mit gewickeltem Rotor (20);
   - einen Schritt der Umwandlung der gemessenen Dreiphasenströme ($i_a$, $i_b$, $i_c$) in einem zweiphasigen Bezugssystem ($\hat{dq}$);
   - einen ersten Teil (11), der enthält:

     - einen Schritt der Einspeisung eines Hochfrequenz-Spannungssignals am Eingang der Maschine;
     - einen Schritt der heterodynen Demodulation, um einen Positionsschätzfehlerwert ($\varepsilon$) des Rotors (20) zu bestimmen;

   **dadurch gekennzeichnet, dass** es einen zweiten Teil (12) enthält, der aufweist:

     - einen Schritt der Berechnung des Vorzeichens ($\sigma$) des Positionsschätzfehlers ($\varepsilon$);
     - einen Schritt der Schätzung der Position des Rotors ($\hat{\theta}_{k+1}$) abhängig von einer geschätzten Geschwindigkeit des Rotors ($\hat{\omega}_k$), einem Positionsverstärkungsparameter (Ke) multipliziert mit dem so berechneten Vorzeichen ($\sigma$) des Fehlers ($\varepsilon$), unabhängig von den Parametern der elektrischen Maschine, wie Werte von Statorinduktivitäten der elektrischen Maschine; und
     - einen Schritt der Schätzung der Geschwindigkeit des Rotors ($\hat{\omega}_{k+1}$) abhängig von einem Geschwindigkeitsverstärkungsparameter ($K_\omega$) multipliziert mit dem so berechneten Vorzeichen ($\sigma$) des Fehlers ($\varepsilon$), unabhängig von den Parametern der elektrischen Maschine, wie Werte von Statorinduktivitäten der elektrischen Maschine.

2. Schätzverfahren nach Anspruch 1, **dadurch gekennzeichnet, dass** der Schritt der Schätzung der Position des Rotors ($\hat{\theta}_{k+1}$) zu einem gegebenen Zeitpunkt (k+1) von der geschätzten Position ($\hat{\theta}_k$) zu einem vorhergehenden Zeitpunkt (k) sowie von der geschätzten Geschwindigkeit ($\hat{\omega}_k$) zum vorhergehenden Zeitpunkt (k) abhängt.

3. Schätzverfahren nach Anspruch 1 oder 2, **dadurch gekennzeichnet, dass** der Schritt der Schätzung der Geschwindigkeit des Rotors ($\hat{\omega}_{k+1}$) zu einem gegebenen Zeitpunkt (k+1) von der geschätzten Geschwindigkeit ($\hat{\omega}_k$) zum vorhergehenden Zeitpunkt (k) abhängt.

4. Schätzverfahren nach einem der Ansprüche 1 bis 3, **dadurch gekennzeichnet, dass** es außerdem einen Schritt der Berechnung der Beschleunigung ($\hat{a}_{k+1}$) abhängig vom Vorzeichen ($\sigma$) des Fehlers ($\varepsilon$) und von der geschätzten Beschleunigung ($\hat{a}_k$) zum vorhergehenden Zeitpunkt (k) durchführt.

5. Schätzverfahren nach einem der Ansprüche 1 bis 4, **dadurch gekennzeichnet, dass** es außerdem einen Schritt der Berechnung der Beschleunigungsdynamik ($\sigma_{k+1}$) abhängig vom Vorzeichen ($\sigma$) des Fehlers ($\varepsilon$) und vom geschätzten Beschleunigungsdynamikwert ($\hat{\sigma}_k$) zum vorhergehenden Zeitpunkt (k) enthält.

6. Schätzverfahren nach Anspruch 5, **dadurch gekennzeichnet, dass** der Schritt der Berechnung der Beschleunigung ($\hat{a}_{k+1}$) vom geschätzten Beschleunigungsdynamikwert ($\hat{\sigma}_k$) zum vorhergehenden Zeitpunkt (k) abhängt.

7. Schätzverfahren nach einem der Ansprüche 4 bis 6, **dadurch gekennzeichnet, dass** die Positions- (Kθ) und Geschwindigkeitsverstärkungsparameter (Kω) vom geschätzten Beschleunigungsdynamikwert $(\hat{\sigma}_{\boldsymbol{k}})$ zum vorhergehenden Zeitpunkt (k) abhängen.

8. Schätzverfahren nach einem der Ansprüche 5 oder 6, **dadurch gekennzeichnet, dass** die Positions- (Kθ) und Geschwindigkeitsverstärkungsparameter (Kω) vom geschätzten Beschleunigungswert $(\hat{\sigma}_{\boldsymbol{k}})$ zum vorhergehenden Zeitpunkt (k) abhängen.

**Claims**

1. Method for estimating the speed and the position of a rotor (20) of a wound-rotor synchronous machine (20) powered by a three-phase inverter, comprising:

   - a step of measurement of the three-phase currents ($i_a$, $i_b$, $i_c$) at the input of the wound-rotor synchronous machine (20);
   - a step of transformation of the measured three-phase currents ($i_a$, $i_b$, $i_c$) into a two-phase reference frame $(\hat{\boldsymbol{d}}\hat{\boldsymbol{q}})$;
   - a first part (11) comprising:

     - a step of injection at the input of the machine of a high-frequency voltage signal;
     - a step of heterodyne demodulation to determine a rotor (20) position estimation error value ($\varepsilon$);

   **characterized in that** it comprises a second part (12) comprising:

     - a step of calculation of the sign ($\sigma$) of the position estimation error ($\varepsilon$);
     - a step of estimation of the position of the rotor ($\hat{\theta}_{k+1}$) as a function of an estimated speed of the rotor ($\hat{\omega}_k$), of a position gain parameter ($K_\theta$) multiplied by the sign ($\sigma$) of the error ($\varepsilon$) thus calculated, independently of the parameters of the electric machine, such as stator inductance values of the electric machine; and
     - a step of estimation of the speed of the rotor ($\hat{\omega}_{k+1}$) as a function of a speed gain parameter ($K_\omega$) multiplied by the sign ($\sigma$) of the error ($\varepsilon$) thus calculated, independently of the parameters of the electric machine, such as stator inductance values of the electric machine.

2. Estimation method according to Claim 1, **characterized in that** the step of estimation of the position of the rotor ($\hat{\theta}_{k+1}$) at a given instant (k+1) is a function of the estimated position ($\hat{\theta}_k$) at a preceding instant (k), and of the speed ($\hat{\omega}_k$) estimated at the preceding instant (k).

3. Estimation method according to Claim 1 or 2, **characterized in that** the step of estimation of the speed of the rotor ($\hat{\omega}_{k+1}$) at a given instant (k+1) is a function of the speed ($\hat{\omega}_k$) estimated at the preceding instant (k).

4. Estimation method according to any one of Claims 1 to 3, **characterized in that** it implements a step of calculation of the acceleration ($\hat{\alpha}_{k+1}$) as a function of the sign ($\sigma$) of the error ($\varepsilon$) and of the acceleration ($\hat{\alpha}_k$) estimated at the preceding instant (k).

5. Estimation method according to any one of Claims 1 to 4, **characterized in that** it further comprises a step of calculation of the acceleration dynamic range ($\hat{\sigma}_{k+1}$) as a function of the sign ($\sigma$) of the error ($\varepsilon$) and of the acceleration dynamic range value ($\hat{\sigma}_k$) estimated at the preceding instant (k).

6. Estimation method according to Claim 5, **characterized in that** the step of calculation of the acceleration ($\hat{\alpha}_{k+1}$) is a function of the acceleration dynamic range value ($\hat{\sigma}_k$) estimated at the preceding instant (k).

7. Estimation method according to any one of Claims 4 to 6, **characterized in that** the position ($K_\theta$) and speed ($K_\omega$) gain parameters are a function of the acceleration dynamic range value ($\hat{\sigma}_k$) estimated at the preceding instant (k).

8. Estimation method according to either one of Claims 5 and 6, **characterized in that** the position ($K_\theta$) and speed ($K_\omega$) gain parameters are a function of the acceleration value ($\hat{\sigma}_k$) estimated at the preceding instant (k).

Fig.1

Fig.2

Fig.3

# Fig.4

# Fig.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2004070360 A1

- CN 103427746 B